**Europäisches Patentamt**

**European Patent Office**

**Office européen des brevets**

(19)

(11) Veröffentlichungsnummer : **0 437 442 B1**

(12) **EUROPÄISCHE PATENTSCHRIFT**

(45) Veröffentlichungstag der Patentschrift :
20.05.92 Patentblatt 92/21

(51) Int. Cl.$^5$ : **B60H 1/00**

(21) Anmeldenummer : **89909157.3**

(22) Anmeldetag : **23.08.89**

(86) Internationale Anmeldenummer :
**PCT/DE89/00547**

(87) Internationale Veröffentlichungsnummer :
**WO 90/03285 05.04.90 Gazette 90/08**

(54) **HEIZUNGSANLAGE FÜR DEN FAHRGASTRAUM EINES KRAFTFAHRZEUGES MIT EINER FLÜSSIGKEITSGEKÜHLTEN BRENNKRAFTMASCHINE.**

(30) Priorität : **21.09.88 DE 3831959**

(43) Veröffentlichungstag der Anmeldung :
**24.07.91 Patentblatt 91/30**

(45) Bekanntmachung des Hinweises auf die
Patenterteilung :
**20.05.92 Patentblatt 92/21**

(84) Benannte Vertragsstaaten :
**DE FR GB IT SE**

(56) Entgegenhaltungen :
**FR-A- 590 737**
**FR-A- 2 131 514**
**FR-A- 2 580 557**
**US-A- 3 183 964**
**US-A- 3 241 804**
**US-A- 4 416 307**

(73) Patentinhaber : **ROBERT BOSCH GMBH**
**Postfach 30 02 20**
**W-7000 Stuttgart 30 (DE)**

(72) Erfinder : **BERTLING, Johannes-Gerhard**
**Alter Postweg 37**
**W-7143 Vaihingen/Enz (DE)**
Erfinder : **HESS, Jürgen**
**Am Tonhügel 16**
**W-7570 Baden-Baden (DE)**
Erfinder : **LENTZ, Gerd**
**Kettenmatt 11**
**W-7580 Bühl-Oberweier (DE)**
Erfinder : **HEIER, Christoph**
**Dreherstr. 14**
**W-7557 Iffezheim (DE)**

Jouve, 18, rue Saint-Denis, 75001 PARIS

## Beschreibung

### Stand der Technik

Die Erfindung geht aus von einer Heizungsanlage nach der Gattung des Hauptanspruchs. Es ist schon eine Heizungsanlage bekannt (FR-A-21 31 514), bei der, neben dem den Kühlkreislauf aufrechthaltenden Förderaggregat, in der Heizschleife ein Magnetventil angeordnet ist, welche im Bedarfsfall, bei aktivierter Heizungsanlage, für einen ordnungsgemäßen Durchfluß des von der Brennkraftmaschine erhitzten Kühlwassers durch den Wärmetauscher sorgt. Wenn dann aber kein Wärmebedarf mehr besteht, sperrt das zwischen der Heizungspumpe und dem Wärmetauscher angeordnetes Magnetventil die Wärmezufuhr zum Wärmetauscher. In diesem Betriebszustand der Heizungsanlage arbeitet die Heizungspumpe gegen das geschlossene Ventil, was zu verstärkten Arbeitsgeräuschen führt, die durch die als Resonanzboden wirkende Fahrzeugkarosserie verstärkt erheblich stören können. Weiter ist der Aufbau der bekannten Heizungsanlage hinsichtlich des Magnetventils recht aufwendig und der Betrieb im Hinblick auf die bei eingeschalteter Heizautomatik stets mitlaufende, gegen das geschlossene Ventil arbeitende Heizungspumpe wenig wirtschaftlich.

### Vorteile der Erfindung

Die erfindungsgemäße Heizungsanlage mit den kennzeichnenden Merkmalen des Hauptanspruchs hat demgegenüber den Vorteil, daß das aufwendige Magnetventil entfallen kann. Weiter werden die Arbeitsgeräusche des Förderaggregats entscheidend vermindert, weil dieses, bei geschlossener Absperrvorrichtung, gegen beide Seiten der beweglichen Wand arbeitet, wodurch sich die vom Förderaggregat ausgehenden Schwingungen aufheben, so daß die störende Geräuscheentwicklung zumindest stark verringert wird.

Durch die in den Unteransprüchen aufgeführten Maßnahmen sind vorteilhafte Weiterbildungen und Verbesserungen der im Hauptanspruch angegebenen Heizungsanlage möglich.

### Zeichnung

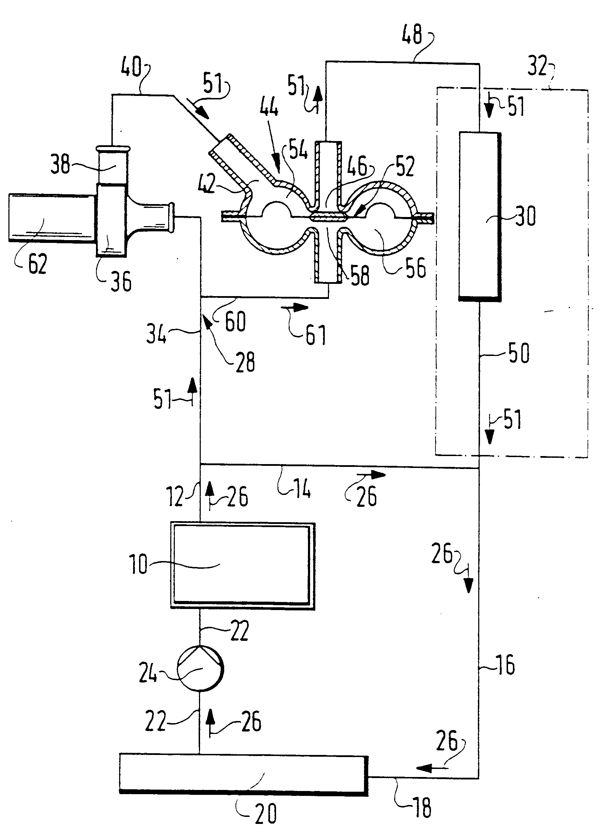

Ein Ausführungsbeispiel der Erfindung ist in der Zeichnung dargestellt und in der nachfolgenden Beschreibung näher erläutert. Die einzige, zur Zeichnung gehörende Figur zeigt eine schematische Darstellung der Heizungsanalge, mit einer im Schnitt schematisch dargestellten Absperrvorrichtung.

### Beschreibung des Ausführungsbeispiels

Eine in der Zeichnung dargestellte Heizungsanlage weist eine zu einem nicht näher dargestellten Kraftfahrzeug gehörende Brennkraftmaschine 10 auf,welche über einen Kühlwasserkreislauf im Betrieb gekühlt wird. Ausgehend von der Brennkraftmaschine strömt das Kühlwasser über Leitungsabschnitte 12, 14, 16, 18 in einen an sich bekannten, luftgekühlten Kühler 20 und von diesem aus über eine weitere Leitung 22 zu einem Förderaggregat 24, das von der Brennkraftmaschine angetrieben das Kühlwasser im Kühlkreislauf umwälzt. Das Kühlwasser strömt also in Richtung der pfeile 26 durch den Kühlkreislauf 10, 12, 14, 16, 18, 20, 24. An den Kühlkreislauf ist ein Heizungskreislauf 28 angeschlossen, in dem ein Wärmetauscher 30 liegt, welcher im Fahrgastraum 32 des Kraftfahrzeuges installiert ist. Der Heizungskreislauf 28 ist durch eine schleifenartige Erweiterung des Kühlmittelkreislaufs gebildet. Bezogen auf den Wärmetauscher 30 ist eine Vorlaufleitung 34, 40 48 der Heizschleife 28 in Strömungsrichtung 26 des Kühlkreislaufs hinter der Brennkraftmaschine 10 mit dem Kühlkreislauf verbunden. Diese Vorlaufleitung mündet saugseitig in eine Strömungspumpe 36, an deren Druckstutzen 38 das eine Teilstück 40 des Vorlaufs der Heizschleife 28 angeschlossen ist. Das Vorlaufteilstück 40 ist über eine Zuströmöffnung 42 mit einer Absperrvorrichtung 44 verbunden, die eine kammerartige Erweiterung der Vorlaufleitung 34, 40, 48 darstellt. Die Absperrvorrichtung 44 weist weiter eine Abströmöffnung 46 auf, die über das weiteres Teilstück 48 mit dem Wärmetauscher 30 leitungsverbunden ist. Von dem Wärmetauscher 30 aus führt eine Rücklaufleitung 50 zurück zum Heizungskreislauf 12, 14, 16, 18, 20, 22, 24. Die Rücklaufleitung 50 mündet dabei in Strömungsrichtung 26 des Kühlkreislaufs gesehen vor dem Kühler 20 in den Kühlkreislauf. Die beim Ausführungsbeispiel als separates Element ausgebildete Absperrvorrichtung 44 umsclließt eine Kammer, welche durch eine Membran 52 in zwei Teilkammern 54 und 56 unterteilt ist. Die Membran 52 bildet eine bewegbare Wand, deren Rand dicht und fest mit der gehäuseartigen Wand der Absperrvorrichtung 44 verbunden ist. Dabei ist die Membran 52 so angeordnet, daß sich sowohl die Zuströmöffnung 42 als auch die Abströmöffnung 46 in der einen Teilkammer 54 befinden. Die andere Teilkammer 56 weist eine Drucköffnung 58 auf, die über eine Stichleitung 60 mit dem Teilstück 34 der Vorlaufleitung der Heizungsschleife 28 verbunden ist. Die Ausbildung und Anordnung der Membran 52 ist so getroffen, daß sie in der in der Zeichnung gezeigten Ruhestellung die Abströmöffnung 46 verschließt. Die Strömungspumpe 36 wird durch einen drehzahlregelbaren, elektrischen Antriebsmotor 62 angetrieben.

Wenn nun während des Betriebs des Kraftfahrzeuges die Heizungsanlage für den Fahrgastraum 32 nicht eingeschaltet ist, steht der im Kühlkreislauf herrschende Druck auch in den Teilbereichen 34, 36, 38 und 40 der Vorlaufleitung der Heizschleife 28 an. Es ist klar, daß der in dem Teilstück 34 der Vorlaufleitung vorhandene, von dem Förderaggregat 24 erzeugte Druck sich über die nicht dichtende Strömungspumpe 36 und deren Druckstutzen 38 in das Vorlaufleitungsteilstück 40 fortsetzt, so daß dieser Druck auch in der Teilkammer 54 der Absperrvorrichtung 44 herrscht. Dieser Druck steht aber auch über die Stichleitung 60 und die Drucköffnung 58 in der anderen Teilkammer 56 der Absperrvorrichtung 44 an (Pfeil 61). Da nun die der Teilkammer 56 zugewandte Fläche der Membran 52 um die Querschnittsfläche der Abströmöffnung 46 größer ist als die der Teilkammer 54 zugewandte Fläche der Membran 52, ist für eine ordnungsmäße Abdichtung der einen Teilkammer 54 gegenüber der Abströmöffnung 46 gesorgt. Es ist also sichergestellt, daß bei ausgeschalteter Heizungsanlage dem Wärmetauscher 30 keine Wärme zugeführt wird. Weiter hat die Anordnung der beschriebenen Absperrvorrichtung den Vorteil, daß die von der Kühlmittel-Förderaggregat 24 ausgehenden Druckschwingungen gleichzeitig und auf beiden Seiten der Membran 54 anstehen, so daß diese sich aufheben. Von dem Kühlmittel-Förderaggregat 24 ausgehende störende Geräusche werden somit auf ein Minimum gesenkt.

Wenn nun aber ein im Fahrgastraum 22 untergebrachter Wärmefühler einer nicht dargestellten Steuerelektronik meldet, daß dem Fahrgastraum 32 Wärme zugeführt werden muß, werden zunächst der Elektromotor 62 und damit die Strömungspumpe 36 aktiviert. Die Strömungspumpe 36 erhöht somit den Druck in dem Teilstück 40 der Vorlaufleitung und damit auch in der einen Teilkammer 54 der Absperrvorrichtung 24. Die Drucksteigerung in diesen Teilbereichen der Heizungsschleife 28 ist dabei so groß, daß der in der anderen Teilkammer 56 der Absperrvorrichtung 44 herrschende Druck überwunden wird, so daß sich die Membran 52 von der Abströmöffnung 46 abhebt und an der Drucköffnung 58 zur Anlage kommt. Durch die Freigabe der Abströmöffnung 46 strömt nun die von der Brennkraftmaschine 10 kommende Kühlflüssigkeit teilweise über den Heizungsvorlauf 34, 36, 38, 40 in die eine Teilkammer 54 der Absperrvorrichtung 44 und verläßt diese über die Abströmöffnung 46, von wo aus sie über das weitere Teilstück 48 der Vorlaufleitung in den Wärmetauscher 30 gelangt. Von diesem aus wird sie über die Rücklaufleitung 50 wieder in den Kühlkreislauf 10 bis 24 zurückgeleitet. Dies ist in der Zeichnung duch die Pfeile 51 verdeutlicht.

Es ist denkbar, im Fahrgastraum 32 des Kraftfahrzeuges mehrere Wärmetauscher 30 anzuordnen, denen dann jeweils eine komplette Heizschleife 28 zuzuordnen ist. Weiter ist es denkbar, die Absperrvorrichtung 44 pneumatisch, elektrisch oder mechanisch zu betätigen. Die Absperrvorrichtung kann selbstverständlich auch extern angeordnet oder in die Strömungspumpe 36 integriert sein.

Die Anordnung der elektromotorisch angetriebenen Strömungspumpe 36 in der Heizschleife 28 stellt auch dann einen ordnungsgemäßen Durchfluß der erhitzen Kühlflüssigkeit der Heizschleife 28 sicher, wenn das Kühlmittel-Förderaggregat 24, beispielsweise bei starker Kälte und nur unter geringer Belastung arbeitende Brennkraftmaschine 10,

alleine nicht mehr eine ordentliche Versorgung des Wärmetauschers 30 sicherstellen kann. Von besonderer Bedeutung ist dabei, daß der Elektromotor 62 drehzahlregelbar ist, so daß auf einfache Weise eine Volumenstrom-Änderung des Heizmediums erreicht werden kann

## Patentansprüche

1. Heizungsanlage für den Fahrgastraum eines Kraftfahrzeuges mit einer flüssigkeitsgekühlten Brennkraftmaschine (10), deren Kühlkreislauf (12, 14, 16, 18, 20, 22) ein die Kühlflüssigkeit umwälzendes Förderaggregat (24) und eine an den Kühlkreislauf angeschlossene Heizschleife (28) aufweist, die wenigsten einen im Fahrgastraum (32) angeordneten Wärmetauscher (30) hat, dessen Vorlaufleitung (34, 40, 48) in Strömungsrichtung (51) der Flüssigkeit hinter der Brennkraftmaschine (10) mit dem Kühlkreislauf (12, 14, 16, 18, 20, 22) leitungsverbunden ist, und dessen Rücklaufleitung (50) zu dem Förderaggregat führt, wobei die Heizschleife mit einer öffenbaren Absperrvorrichtung (44) versehen ist, dadurch gekennzeichnet, daß die Absperrvorrichtung (44) eine kammerartige Erweiterung der Heizschleife (28) aufweist, welche durch eine bewegbare Wand (52) in Teilkammern (54, 56) unterteilt ist, von denen die eine Teilkammer (54) eine Zuströmöffnung (42) und eine Abströmöffnung (46) und die andere Teilkammer (56) eine mit der Heizschleife (28) verbundene Drucköffnung (58) hat und daß die Wand (52) zwischen zwei Betriebsstellungen bewegbar ist, in welchen sie wechselweise die Abströmöffnung (46) und die Drucköffnung (58) verschließt.

2. Heizungsanlage nach Anspruch 1, dadurch gekennzeichnet, daß alle Öffnungen (42, 46 und 58) der Absperrvorrichtung (44) mit der Vorlaufleitung (34, 40, 48 und 60) leitungsverbunden sind.

3. Heizungsanlage nach einem der Ansprüche 1 oder 2, dadurch gekennzeichnet, daß im Fahrgastraum (32) des Kraftfahrzeuges mehrere Wärmetauscher (30) angeordnet sind, von denen jeder über eine ihm zugeordnete Heizungsschleife (28) mit dem Kühlmittelkreislauf (12, 14, 16, 18, 20, 22) verbunden ist.

4. Heizungsanlage nach einem der Ansprüche 1 bis 3, dadurch gekennzeichnet, daß die bewegbare Wand durch eine mit der Kammerwand der Absperrvorrichtung (44) verbundene Membran gebildet ist, die sich in Ruhestellung in ihrer einen Betriebsstellung befindet.

5. Heizungsanlage nach Anspruch 4, dadurch gekennzeichnet, daß die Membran (52) in ihrer Ruhestellung die Abströmöffnung (46) der einen Kammer (54) verschließt.

6. Heizungsanlage nach einem der Ansprüche 4 oder 5, dadurch gekennzeichnet, daß Mittel (36) zum Überführen der Membran (52) in ihre andere Betriebsstellung angeordnet sind.

7. Heizungsanlage nach Anspruch 6, dadurch gekennzeichnet, daß die Mittel durch eine ein- und ausschaltbare Pumpe (36) in dem zur Zuströmöffnung (42) der einen Teilkammer (54) führenden Leitungszweig (34, 40, 48) der Heizungsschleife (28) gebildet sind.

8. Heizungsanlage nach Anspruch 7, dadurch gekennzeichnet, daß die Pumpe (36) durch einen drehzahlregelbaren Elektromotor (62) angetrieben ist.

## Claims

1. Heating system for the passenger compartment of a motor vehicle having a liquid-cooled internal combustion engine (10), the cooling circuit (12, 14, 16, 18, 20, 22) of which has a delivery unit (24) circulating the cooling liquid and a heating loop (28) which is connected to the cooling circuit and has at least one heat exchanger (30), which is arranged in the passenger compartment (32), the forward line (34, 40, 48) of which is connected to the cooling circuit (12, 14, 16, 18, 20, 22) at a point downstream of the internal combustion engine (10), in the direction of flow (51) of the liquid, and the return line (50) of which leads to the delivery unit, the heating loop being provided with an openable shut-off device (44), characterized in that the shut-off device (44) has a chamber-like expansion of the heating loop (28), which is divided by a moveable wall (52) into subchambers (54, 56), of which one subchamber (54) has an inflow port (42) and an outflow port (46) and the other subchamber (56) has a pressure port (58) connected to the heating loop (28), and in that the wall (52) is moveable between two operating positions in which it alternately closes the outflow port (46) and the pressure port (58).

2. Heating system according to Claim 1, characterized in that all ports (42, 46 and 58) of the shut-off device (44) are connected to the forward line (34, 40, 48 and 60).

3. Heating system according to either of Claims 1 or 2, characterized in that a plurality of heat exchangers (30) each of which is connected via an associated heating loop (28) to the coolant circuit (12, 14, 16, 18, 20, 22), is arranged in the passenger compartment (32) of the motor vehicle.

4. Heating system according to one of Claims 1 to 3, characterized in that the moveable wall is formed by a diaphragm which is connected to the chamber wall of the shut-off device (44) and, in the rest position, is in one of its operating positions.

5. Heating system according to Claim 4, characterized in that, in its rest position, the diaphragm (52) closes the outflow port (46) of one chamber (54).

6. Heating system according to either of Claims 4 or 5, characterized in that means (36) for transferring the diaphragm (52) into its other operating position are provided.

7. Heating system according to Claim 6, characterized in that the means are formed by a pump ( 36 ), which can be switched on and off, in that line branch (34, 40, 48) of the heating loop (28) which leads to the inflow port (42) of one subchamber (54).

8. Heating system according to Claim 7, characterized in that the pump (36) is driven by a variable-speed electric motor (62).

## Revendications

1. Système de chauffage pour l'habitacle d'un véhicule automobile dont le moteur à combustion interne (10) est refroidi par un liquide dont le circuit de refroidissement (12, 14, 16, 18, 20, 22) présente un bloc de refoulement (24) faisant circuler le liquide de refroidissement et une boucle de chauffage (28) raccordée au circuit de refroidissement bouclé qui a au moins un échangeur de chaleur (30) disposé dans l'habitacle des passagers (32), échangeur dont la conduite montante (34, 40, 48) est reliée, dans le sens de l'écoulement (51) du liquide, en arrière du moteur à combustion interne (10), au circuit de refroidissement (12, 14, 16, 18, 20, 22) et dont la conduite de retour (50) mène au bloc de refoulement, la boucle de chauffage étant pourvue d'un dispositif de blocage (44) pouvant s'ouvrir, système de chauffage caractérisé en ce que le dispositif de blocage (44) présente une extension en forme de chambre de la boucle de chauffage (28), qui est subdivisée par une paroi mobile (52) en chambres partielles (54, 56), l'une des chambres partielles, la chambre (54) ayant une ouverture d'admission (42) et une ouverture d'évacuation (46) et l'autre chambre partielle (56) ayant un orifice sous pression (58) relié à la boucle de chauffage (28) et en ce que la paroi (52) est mobile entre deux positions de fonctionnement, dans lesquelles elle ferme au choix l'ouverture d'évacuation (46) et l'ouverture sous pression (58).

2. Système de chauffage selon la revendication 1, caractérisé en ce que toutes les ouvertures (42, 46 et 58) du dispositif de blocage (44) sont reliées à la conduite montante (34, 40, 48 et 60).

3. Système de chauffage selon l'une des revendications 1 ou 2, caractérisé en ce que dans l'habitacle des passagers (32) du véhicule automobile plusieurs échangeurs de chaleur (30) sont disposés, dont chacun est relié via une boucle de chauffage (28) qui lui est associée, au circuit de l'agent de refroidissement (12, 14, 16, 18, 20, 22).

4. Système de chauffage selon l'une des revendications 1 à 3, caractérisé en ce que la paroi mobile est formée par une membrane reliée à la paroi de la chambre du dispositif de blocage (44), membrane qui se trouve en position de repos dans l'une de ses positions de fonctionnement.

5. Système de chauffage selon la revendication 4, caractérisé en ce que la membrane (52) ferme, dans sa position de repos, l'ouverture d'évacuation (46) de l'une des chambres, la chambre (54).

6. Système de chauffage selon l'une des revendications 4 ou 5, caractérisé en ce que des moyens (36) sont disposés, pour le transfert de la membrane (52), dans son autre position de fonctionnement.

7. Système de chauffage selon la revendication 6, caractérisé en ce que les moyens sont constitués par une pompe (36) qui peut être mise en marche et arrêtée dans la branche (34, 40, 48) de la boucle de chauffage (28) conduisant à l'ouverture d'alimentation (42) de l'une des chambres partielles, la chambre (54).

8. Système de chauffage selon la revendication 7, caractérisé en ce que la pompe (36) est entraînée par un moteur électrique (62) dont la vitesse de rotation est réglable.